# FASCICULE DE BREVET EUROPEEN

(11) **EP 2 006 163 B1**
(45) Date de publication et mention de la délivrance du brevet: **22.12.2010**
(21) Numéro de dépôt: 08158342.9
(22) Date de dépôt: 16.06.2008
(51) Int. Cl.: B60R 19/48, B60Q 1/04, B60Q 1/20

(54) **Lot d'au moins deux modules destinés à être rapportés sur une peau de pare-chocs**
Set bestehend aus mindestens zwei Modulen zum Anbringungen auf einer Stoßstangenhaut
Batch of at least two modules intended for being added to the skin of a bumper

(30) Priorité: 21.06.2007 FR 0755943
(43) Date de publication de la demande: 24.12.2008
(73) Titulaire: Compagnie Plastic Omnium, 69007 Lyon (FR)
(72) Inventeur: Bourennane, Faicel, 38390 MONTALIEU VERCIEU (FR)
(74) Mandataire: Remy, Vincent Noel Paul

(56) Documents cités:
- EP-A- 0 548 507
- EP-A- 1 048 524
- EP-A- 1 876 054
- WO-A-03/104030

## Description

L'invention concerne le domaine technique des pare-chocs de véhicules automobiles.

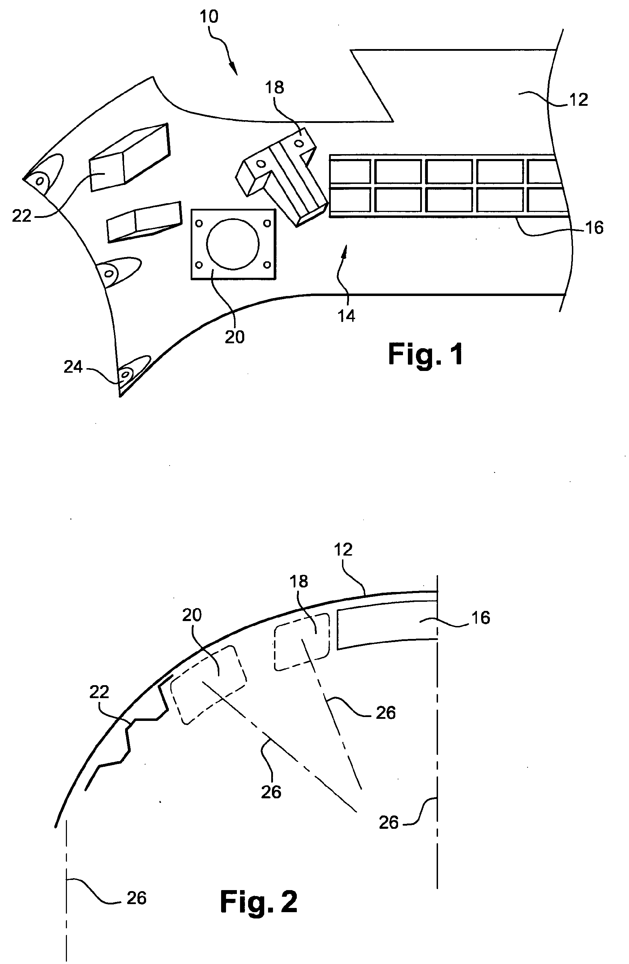

Actuellement, les constructeurs automobiles intègrent de plus en plus d'organes fonctionnels aux pare-chocs de véhicules. Par exemple, le pare-chocs 10 de véhicule automobile représenté sur la figure 1 comprend une peau 12 de pare-chocs et une pluralité d'organes fonctionnels 14 tels qu'un absorbeur nervuré 16, un lave projecteur 18, un phare anti-brouillard 20, un dispositif anti-cloquage 22 et des moyens 24 de fixation d'un écran de passage de roue. Dans ce pare-chocs 10, chaque organe fonctionnel 14 est rapporté sur la peau 12 indépendamment des autres organes fonctionnels.

Pour des raisons d'économie et de simplicité de montage, les constructeurs automobiles souhaitent intégrer plusieurs organes fonctionnels sur une même pièce, par exemple sur une pièce support destinée à être rapportée derrière la peau de pare-chocs. Par exemple, cette pièce support peut comprendre à la fois un absorbeur, un dispositif anti-cloquage et des moyens de fixation d'un lave projecteur.

Cependant, la conception et la fabrication d'une telle pièce support multifonctions sont particulièrement complexes et coûteuses car chaque organe fonctionnel impose à la pièce support des contraintes géométriques et mécaniques propres. Par exemple, lorsqu'un organe fonctionnel est fixé à la pièce support par vissage (comme c'est généralement le cas pour des raisons de résistance à l'arrachement), le trou de vissage ménagé dans la pièce support doit toujours être perpendiculaire à la surface d'appui de l'organe sur la pièce support. Ainsi, en imposant l'orientation de l'organe fonctionnel par rapport à la pièce support conformément au cahier des charges du constructeur, on impose également l'orientation de la surface d'appui et du trou de vissage. Or, le trou de vissage impose une contrainte de démoulage de la pièce support.

A titre d'exemple, on a schématisé sur la figure 2 par des lignes discontinues 26 les axes de démoulage de l'absorbeur 16, du dispositif anti-cloquage 22, des moyens de fixation du lave-projecteur 18 et des moyens de fixation du phare anti-brouillard 20. On constate que les axes de démoulages sont difficilement compatibles car ils ne sont pas parallèles entre eux.

Les modèles d'organes fonctionnels sont imposés par les constructeurs automobiles, notamment pour des raisons d'économies d'échelle. Par conséquent, il n'est pas possible de développer, spécifiquement pour un véhicule donné, un modèle d'organe fonctionnel imposant des contraintes compatibles avec celles des autres organes. II est donc indispensable de se conformer aux contraintes imposées par les organes fonctionnels choisis par les constructeurs.

Pour mouler une pièce support comprenant ces différents organes fonctionnels, il est donc nécessaire de concevoir un moule complexe comportant des parties mobiles facilitant le démoulage de la pièce ou de prévoir une cinématique de démoulage complexe.

Le document EP-A-1 048 524 divulgue un lot de deux modules destinés à être rapportés sur une peau de pare-chocs de véhicule. Chaque module comporte une pièce support conformée de manière à pouvoir être démoulée, et une partie d'adaptation comprenant une zone d'interface avec la pièce support et une zone de fixation d'un organe fonctionnel.

Si toutefois on souhaite simplifier le moule tout en conservant la pluralité de fonctions de la pièce support, il est nécessaire de concevoir l'agencement des organes fonctionnels sur la pièce support en privilégiant, non pas leur fonction propre, mais le démoulage de la pièce support. Par exemple, il peut être nécessaire de modifier l'orientation des nervures de l'absorbeur pour que leur démoulage puisse se faire dans la même direction que l'axe de démoulage du dispositif de fixation de l'anti-brouillard. Il est évident qu'en procédant de la sorte, la qualité de chacun des organes fonctionnels se trouve dégradée. En d'autres termes, il faut trouver un compromis entre la simplicité de moulage et la qualité de la pièce moulée.

L'invention a notamment pour but de résoudre les différents inconvénients précités.

A cet effet, l'invention a pour objet un lot d'au moins deux modules destinés à être rapportés sur une peau de pare-chocs de véhicule, chaque module comportant :
- une pièce support conformée de manière à pouvoir être démoulée sensiblement selon une unique direction de démoulage et de manière à comprendre au moins une zone d'accueil pour une partie d'adaptation, et
- une partie d'adaptation comprenant une zone d'interface avec la pièce support et une zone de fixation d'un organe fonctionnel,
le lot comprenant au moins deux modules dont les parties d'adaptation sont différentes et dont les pièces support sont identiques ou dont les parties d'adaptation sont identiques et les pièces support sont différentes.

En d'autres termes, selon un premier mode de réalisation de l'invention, les deux parties d'adaptation des deux modules du lot sont différentes et les deux pièces supports des deux modules du lot sont identiques. Selon un second mode de réalisation de l'invention, les deux parties d'adaptation des deux modules du lot sont identiques et les deux pièces supports des deux modules du lot sont différentes.

Grâce à l'invention, les organes fonctionnels ne sont pas directement fixés sur la pièce support mais le sont par l'intermédiaire de la partie d'adaptation. Ainsi, il n'est pas nécessaire de tenir compte des contraintes imposées par les organes fonctionnels et par leur moyens de fixation pour concevoir la pièce support. Cette pièce support comprend uniquement des moyens de fixation d'une partie d'adaptation destinée à permettre la fixation des organes fonctionnel. Ces moyens de fixation comprennent une zone d'accueil standard conformée pour que la pièce support puisse être démoulée simplement et donc pour que le moulage ne soit pas trop coûteux.

En particulier, la partie d'adaptation peut être fixée sur la pièce support par encliquetage, agrafage, soudure ou bouterollage, c'est-à-dire par des moyens de fixation qui n'imposent pas de contraintes de démoulage fortes. Par exemple, des moyens d'encliquetage n'imposent pas que la partie femelle soit perpendiculaire à la surface de contact de l'organe avec la pièce support comme c'est le cas avec des moyens de vissage. Il est donc possible de concevoir la partie femelle des moyens d'encliquetage de sorte que son axe de démoulage soit le même que l'axe de démoulage du reste de la pièce support.

Selon le premier mode de réalisation, grâce à la partie d'adaptation, il est possible de monter sur la pièce support plusieurs modèles d'organes fonctionnels provenant de différents fournisseurs en modifiant uniquement l'interface de liaison de la partie d'adaptation avec l'organe fonctionnel, c'est-à-dire sans modifier la pièce support. Cela permet une grande modularité.

Il est également possible de modifier l'agencement de l'organe fonctionnel par rapport à la pièce support, par exemple son orientation, uniquement en agissant sur la conception de la partie d'adaptation. En particulier, cela permet des changements de dernière minute intervenant en cours de conception du pare-chocs sans toutefois entraîner des surcoûts importants.

Selon le second mode de réalisation, on peut modifier l'agencement de l'organe fonctionnel par rapport à la pièce support en agissant uniquement sur la conception de la pièce support.

On peut également intégrer un même modèle d'organe fonctionnel sur plusieurs types de pièces support sans modifier la partie d'adaptation.

Grâce au second mode de réalisation, on peut ainsi produire la partie d'adaptation en grande quantité de manière à réduire les coûts de fabrication, sans crainte de surproduction.

Le lot de l'invention peut en outre comprendre l'une ou plusieurs des caractéristiques suivantes.
- Les zones d'interface des parties d'adaptation des deux modules sont identiques.
- Les zones de fixation des parties d'adaptation des deux modules sont différentes. Ainsi, cela permet de fixer sur la pièce support plusieurs modèles d'organes fonctionnels simplement en adaptant la forme de la zone de fixation.
- Les zones de fixation des parties d'adaptation des deux modules sont identiques.
- La position relative de la zone de fixation par rapport à la zone d'interface de la partie d'adaptation de chacun des deux modules est différente d'un module à l'autre. Cela permet de faire varier l'agencement de l'organe fonctionnel par rapport à la pièce support. Par exemple, il est possible de modifier l'orientation d'une lave-phare d'un modèle donné (c'est-à-dire sans modifier la zone de fixation) par rapport à une pièce support donnée (c'est-à-dire sans modifier la zone d'interface), simplement en modifiant la forme de la partie d'adaptation et donc la position relative de la zone de fixation par rapport à la zone d'interface.
- La zone d'accueil de la pièce support et la zone d'interface de la partie d'adaptation comprennent des moyens de fixation complémentaires, notamment des moyens d'encliquetage.
- La pièce support comprend des moyens de fixation avec la peau de pare-chocs.
- La pièce support et/ou la partie d'adaptation sont réalisées en matière plastique.
- La pièce support comprend, issu de moulage, l'un ou plusieurs des éléments de l'ensemble constitué par un absorbeur, un dispositif anti-cloquage et des moyens de fixation d'un écran de passage de roue.
- Le module comprend en outre un organe fonctionnel fixé sur la partie d'adaptation.
- L'organe fonctionnel est choisi parmi les éléments de l'ensemble constitué par un absorbeur, un lave projecteur, un phare anti-brouillard, un dispositif anti-cloquage, un écran de passage de roue, un capteur d'aide au stationnement, un dispositif pour l'espacement de peaux de pare-chocs lors du stockage ou du transport également appelé entretoise, un renfort de crosse de pare-chocs et un radar.

L'invention sera mieux comprise à la lecture de la description qui va suivre faite uniquement en se référant aux dessins annexés dans lesquels :
- La figure 1 est un schéma d'une peau de pare-chocs munie d'organes fonctionnels,
- La figure 2 représente schématiquement les contraintes de démoulage imposées par les organes fonctionnels portés par la peau de la figure 1,
- La figure 3 est un schéma d'une pièce support de véhicule automobile selon l'invention,
- La figure 4 représente la pièce support de la figure 3 rapportée sur une peau de pare-chocs,
- Les figures 5 et 6 représentent des parties d'adaptation d'un lot selon un premier mode de réalisation de l'invention, destinées à la fixation d'un phare anti-brouillard,
- La figure 7 représente la partie d'adaptation de la figure 5 rapportée sur la pièce support de la figure 3,
- La figure 8 représente une partie d'adaptation d'un lot de l'invention, pour la fixation d'un lave projecteur,
- Les figures 9 et 10 sont des coupes selon A-A de pièces support d'un lot selon un second mode de réalisation de l'invention.

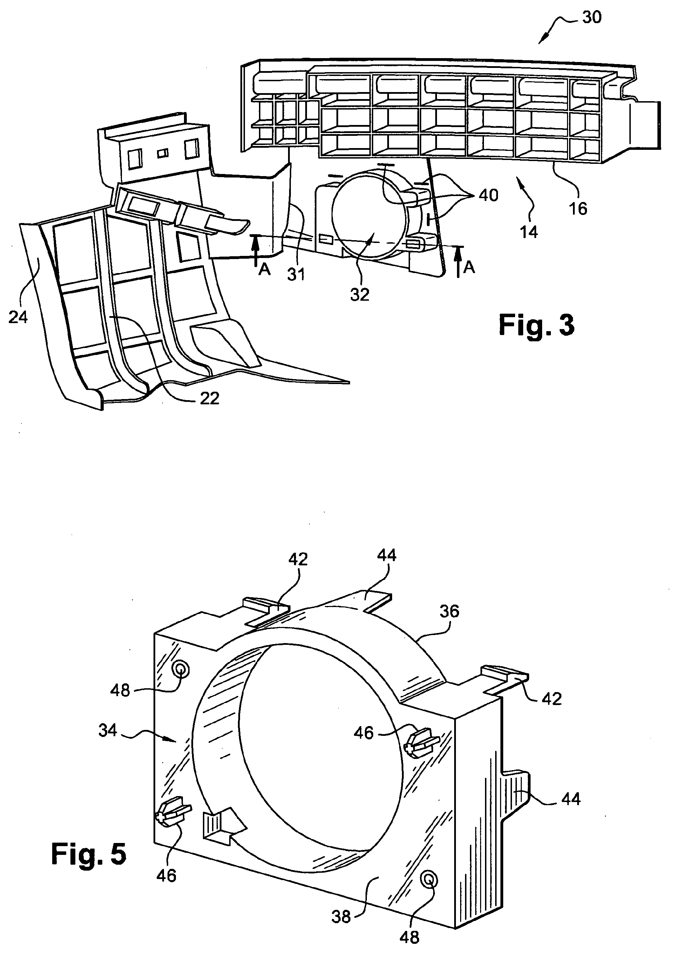

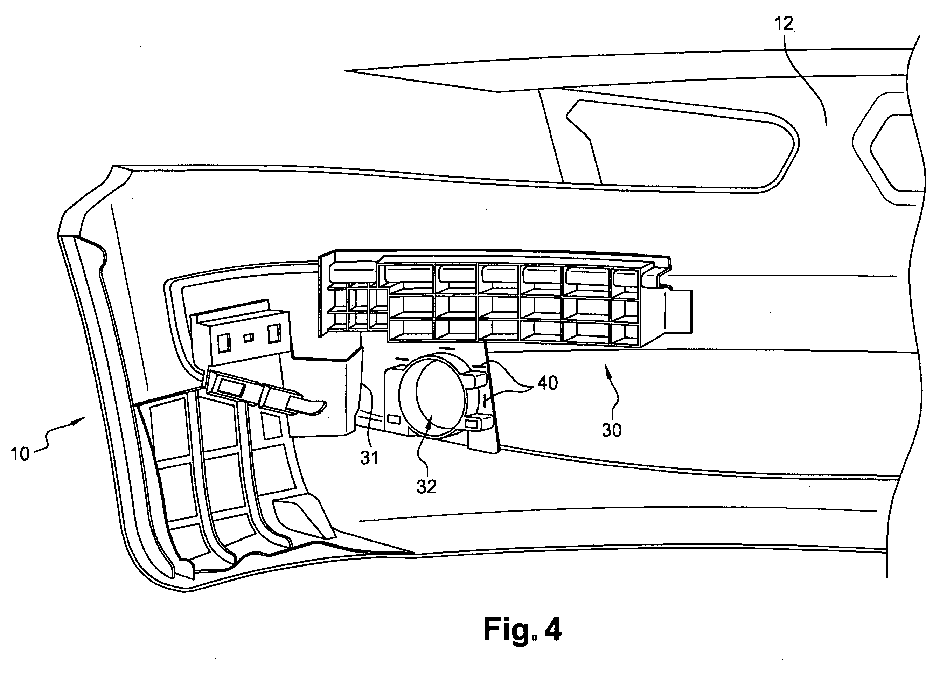

On a représenté sur la figure 3 une pièce support 30 d'un module 35 d'un lot selon l'invention. La pièce 30 est destinée à être rapportée derrière une peau 12 de pare-chocs comme représenté sur la figure 4. Outre la pièce support 30, le module 35 comprend des organes fonctionnels 14.

Certains organes fonctionnels 14 dont un absorbeur 16, un dispositif anti-cloquage 22 ou des moyens 24 de fixation d'un écran de passage de roue sont venus de matière avec la pièce support 30.

D'autres organes fonctionnels comme un phare anti-brouillard ou un lave-projecteur sont rapportés sur la pièce support 30.

La pièce support 30 est réalisée par moulage de matière plastique et est conformée de manière à pouvoir être démoulée sensiblement selon une unique direction de démoulage.

L'absorbeur 16 est destiné à absorber l'énergie de chocs frontaux par compression de nervures. Par conséquent, les nervures doivent être orientées selon une direction longitudinale du véhicule.

Du fait que la direction longitudinale est imposée pour les nervures, la direction de démoulage de la pièce support 30 est nécessairement sensiblement parallèle à la direction longitudinale.

La pièce support comprend une partie frontale comportant l'absorbeur 16 et une partie latérale comportant le dispositif anti-cloquage 22. Ces deux parties frontales et latérales sont reliées par une charnière 31. La charnière 31 permet à la pièce support 30 d'adopter une position de moulage dans laquelle la partie latérale est dans le prolongement de la partie frontale et une position de montage dans laquelle la partie latérale fait un angle avec la partie frontale. Dans sa position de moulage, les nervures du dispositif anti-cloquage 22 sont sensiblement parallèles à la direction longitudinale de démoulage de sorte que la pièce support peut être facilement démoulée. Dans sa position de montage, les nervures du dispositif anti-cloquage 22 sont sensiblement normales à la partie de la peau de pare-chocs en contact du dispositif anti-cloquage 22 comme représenté sur la figure 4.

La pièce support 30 comprend une zone d'accueil 32 pour une partie d'adaptation 34 destinée à la fixation d'un organe fonctionnel rapporté, qui dans l'exemple représenté est un phare anti-brouillard 20. La zone d'accueil 32 est conformée de manière à permettre le démoulage de la pièce support 30 selon l'unique direction de démoulage.

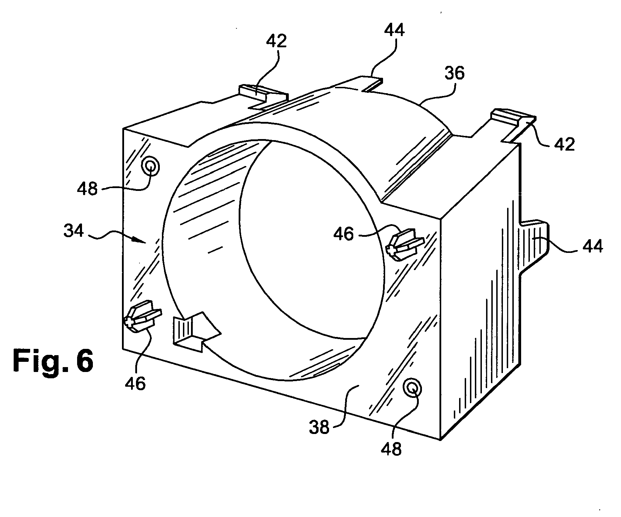

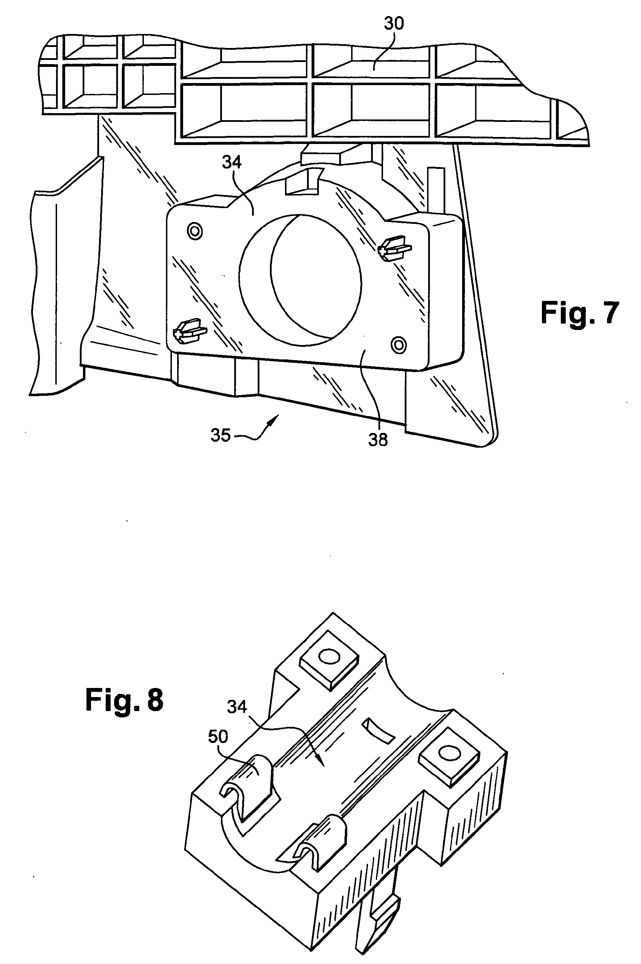

Deux parties d'adaptation 34 différentes sont représentées sur les figures 5 et 6. La partie d'adaptation de la figure 5 est représentée sur la figure 7, montée sur la pièce support 30.

Chaque partie d'adaptation 34 comprend une zone d'interface 36 complémentaire de la zone d'accueil 32 de la pièce support 30 et une zone de fixation 38 du phare anti-brouillard 20.

La zone d'accueil 32 de la pièce support 30 et la zone d'interface 36 de la partie d'adaptation 34 comprennent des moyens d'encliquetage complémentaires comprenant respectivement des lumières 40 et des clips 42 destinés à pénétrer dans les lumières 40. La zone d'accueil 32 de la pièce support 30 et la zone d'interface 36 de la partie d'adaptation 34 comprennent également des moyens 44 de centrage. Les lumières 40 sont conformées de sorte que leur direction de démoulage est la même que la direction de démoulage de l'ensemble de la pièce support. Ainsi, les contraintes de démoulage de la pièce support sont respectées.

La zone de fixation 38 de la partie d'adaptation 34 comprend des moyens 46 pour le positionnement et le centrage du phare anti-brouillard comprenant des ergots saillants, et des moyens 48 pour la fixation du phare comprenant des trous destinés à recevoir des vis de fixation. L'agencement de ces moyens 46 et 48 est fonction du modèle de phare anti-brouillard que l'on fixe à la pièce support 30. En particulier, les trous 48 sont nécessairement perpendiculaires à la surface de contact de la zone de fixation 38. Ainsi, les contraintes de fixation imposées par le phare anti-brouillard sur la partie d'adaptation sont respectées.

Pour déterminer l'orientation du phare anti-brouillard par rapport à la pièce support, on conforme la partie d'adaptation 34 en fonction des besoins, sans toutefois modifier la zone d'interface 36 ni la zone de fixation 38, de manière à ce que les contraintes imposées pour la fixation du phare et pour le démoulage de la pièce support soient respectées.

Les figures 5 et 6 représentent deux parties d'adaptation 34 d'un lot selon un premier mode de réalisation de l'invention, dont les positions relatives des zones de fixation 38 par rapport aux zones d'interface 36 sont différentes. Ainsi, l'angle du phare anti-brouillard par rapport à la pièce support n'est pas le même selon que l'on utilise l'une ou l'autre des parties d'adaptation des figures 5 et 6.

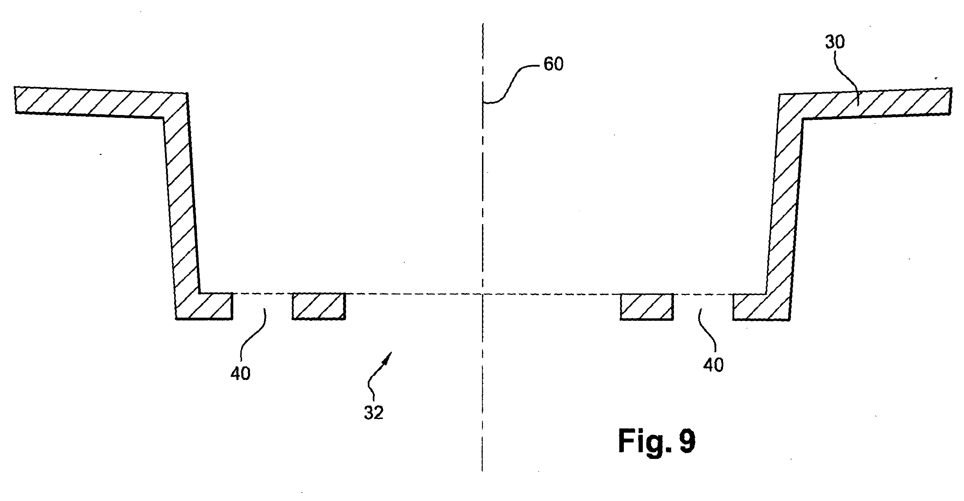

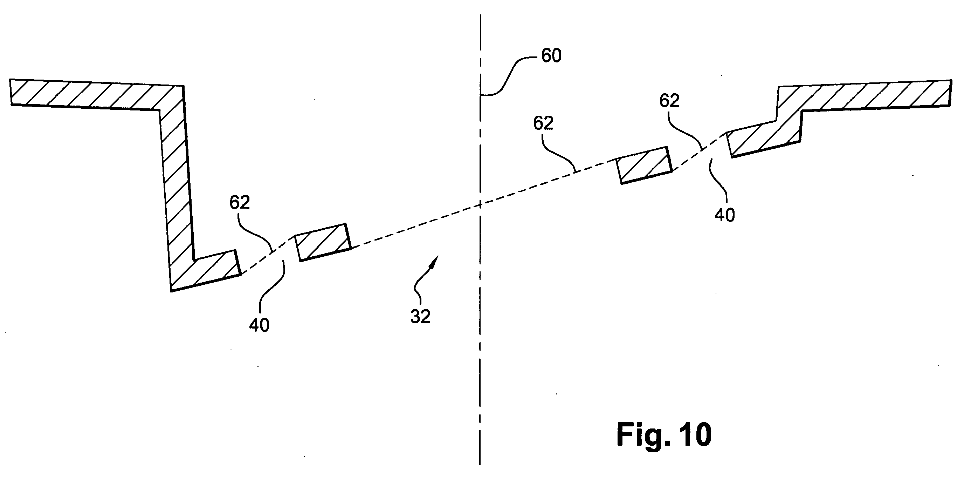

Selon un second mode de réalisation de l'invention représenté sur les figures 9 et 10, les parties d'adaptation de deux modules d'un même lot sont identiques alors que les pièces support des deux modules sont différentes.

Les figures 9 et 10 sont des coupes de deux pièces support 30 comprenant des zones d'accueil 32 pour les parties d'adaptation 34 selon un plan A-A visible sur la figure 3. Les pièces support 30 comprennent des lumières 40 pour l'encliquetage des parties d'adaptation.

L'orientation de la zone d'accueil 32 par rapport au reste de la pièce support 30 n'est pas la même sur les deux pièces support représentées sur les figures 9 et 10. Ainsi, l'angle du phare anti-brouillard par rapport à la pièce support n'est pas le même selon que l'on utilise l'une ou l'autre des pièces support 30 des figures 9 et 10.

Cette modification d'orientation peut être réalisée sans apporter de contraintes supplémentaire de démoulage de la pièce support. En effet, la pièce support de la figure 9 peut être démoulée simplement selon la direction de démoulage 60 car l'axe des lumières 40 est sensiblement orienté selon cette direction. La pièce support de la figure 10 peut également être démoulée simplement selon la direction 60 bien que l'axe des lumières 40 ne soit pas sensiblement orienté selon cette direction car il est possible de prévoir des plans de joint 62 dans les lumières 40. Les pièces supports 30 sont donc toutes les deux conformées de manière à pouvoir être démoulées selon une unique direction de démoulage 60.

Ainsi, grâce à l'utilisation d'une partie d'adaptation fixée à la pièce support par encliquetage, il est possible de modifier l'orientation du phare anti-brouillard en modifiant la pièce support sans toutefois apporter des contraintes supplémentaires de démoulage de la pièce support.

Cela n'aurait pas été possible si le phare anti-brouillard était fixé par vissage directement sur la pièce support car il n'est pas possible de démouler simplement une pièce support munie de trous de vissage dont les axes ne sont pas parallèles à l'axe de démoulage principal de la pièce support. Du fait de l'étroitesse et de la profondeur des trous de vissage, il n'est pas possible de prévoir un plan de joint au niveau du trou de vissage de la même manière qu'avec des lumières 40 de moyens d'encliquetage qui sont large et peu profondes.

L'invention vient d'être décrite en relation à la fixation d'un phare anti-brouillard sur la pièce support. Elle s'applique toutefois à tout autre type d'organe fonctionnel. En particulier, on a représenté à titre d'exemple sur la figure 8 une partie d'adaptation 34 destinée à la fixation d'un lave-phare. On remarque que cette partie d'adaptation 34 comprend des moyens 50 de fixation de lave-phare comprenant des moyens d'encliquetage.

## Revendications

1. Lot d'au moins deux modules (35) destinés à être rapportés sur une peau (12) de pare-chocs (10) de véhicule, **caractérisé en ce que** chaque module (35) comporte :
- une pièce support (30) conformée de manière à pouvoir être démoulée sensiblement selon une unique direction de démoulage et de manière à comprendre au moins une zone d'accueil (32) pour une partie d'adaptation (34), et
- une partie d'adaptation (34) comprenant une zone d'interface (36) avec la pièce support (30) et une zone de fixation (38) d'un organe fonctionnel (14),
le lot comprenant au moins deux modules (35) dont les parties d'adaptation (34) sont différentes et les pièces support (30) sont identiques ou dont les parties d'adaptation (34) sont identiques et les pièces support (30) sont différentes.

2. Lot selon la revendication précédente, dans lequel les zones d'interface (36) des parties d'adaptation (34) des deux modules (35) sont identiques.

3. Lot selon la revendication 2, dans lequel les zones de fixation (38) des parties d'adaptation (34) des deux modules (35) sont différentes.

4. Lot selon la revendication 2, dans lequel les zones de fixation (38) des parties d'adaptation (34) des deux modules (35) sont identiques

5. Lot selon la revendication 3 ou 4, dans lequel la position relative de la zone de fixation (38) par rapport à la zone d'interface (36) de la partie d'adaptation (34) de chacun des deux modules (35) est différente d'un module à l'autre.

6. Lot selon l'une quelconque des revendications précédentes, dans lequel la zone d'accueil (32) de la pièce support (30) et la zone d'interface (36) de la partie d'adaptation (34) comprennent des moyens de fixation (40, 42) complémentaires, notamment des moyens d'encliquetage.

7. Lot selon l'une quelconque des revendications précédentes, dans lequel la pièce support (30) et/ou la partie d'adaptation (34) sont réalisées en matière plastique.

8. Lot selon l'une quelconque des revendications précédentes, dans lequel la pièce support (30) comprend, issu de moulage, l'un ou plusieurs des éléments de l'ensemble constitué par un absorbeur (16), un dispositif anti-cloquage (22) et des moyens (24) de fixation d'un écran de passage de roue.

9. Lot selon l'une quelconque des revendications précédentes, dans lequel le module (35) comprend en outre un organe fonctionnel (14) fixé sur la partie d'adaptation (34).

10. Lot selon la revendication précédente, dans lequel l'organe fonctionnel (14) est choisi parmi les éléments de l'ensemble constitué par un absorbeur (16), un lave projecteur (18), un phare anti-brouillard (20), un dispositif anti-cloquage (22), un écran de passage de roue, un capteur d'aide au stationnement, un dispositif pour l'espacement de peaux de pare-chocs lors du stockage ou du transport, un renfort de crosse de pare-chocs et un radar.

## Claims

1. A batch of at least two modules (35) for fitting on a skin (12) of a vehicle bumper (10), the batch being **characterized in that** each module (35) comprises:
· a support part (30) shaped so as to be capable of being unmolded substantially in a single unmolding direction and so as to include at least one reception zone (32) for receiving an adapter portion (34); and
• an adapter portion (34) including an interface zone (36) for interfacing with the support part (30) and a fastener zone (38) for fastening a functional member (14);
said batch comprising at least two modules (35) having adapter portions (34) that are different and support parts (30) that are identical, or adapter portions (34) that are identical and support parts (30) that are different.

2. A batch according to the preceding claim, wherein the interface zones (36) of the adapter portions (34) of both modules (35) are identical.

3. A batch according to claim 2, wherein the fastener zones (38) of the adapter portions (34) of the two modules (35) are different.

4. A batch according to claim 2, wherein the fastener zones (38) of the adapter portions (34) of both modules (35) are identical.

5. A batch according to claim 3 or claim 4, wherein the position of the fastener zone (38) relative to the interface zone (36) of the adapter portion (34) of each of the two modules (35) is different from one module to the other.

6. A batch according to any preceding claim, wherein the reception zone (32) of the support part (30) and the interface zone (36) of the adapter portion (34) include complementary fastener means (40, 42), in particular snap-fastener means.

7. A batch according to any preceding claim, wherein the support part (30) and/or the adapter portion (34) are made of plastics material.

8. A batch according to any preceding claim, wherein the support part (30) includes molded therewith one or more elements of the set constituted by an impact absorber (16), an anti-denting device (22), and means (24) for fastening a wheel-arch screen.

9. A batch according to any preceding claim, wherein the module (35) also includes a functional member (14) fastened to the adapter portion (34).

10. A batch according to the preceding claim, wherein the functional member (14) is selected from elements of the set constituted by an impact absorber (16), a headlight washer (18), a fog light (20), an anti-denting device (22), a wheel-arch screen, a parking assistance sensor, a device for spacing the bumper skin during storage for transport, bumper overrider reinforcement, and a radar.

## Patentansprüche

1. Set bestehend aus mindestens zwei Modulen (35), die dazu bestimmt sind, auf einer Haut (12) einer Fahrzeugstoßstange (10) angebaut zu werden, **dadurch gekennzeichnet, dass** jedes Modul (35) Folgendes aufweist:
- ein Tragteil (30), das derart ausgebildet ist, dass es im Wesentlichen entlang einer einzigen Abformrichtung abgeformt werden kann, und derart, dass er mindestens einen Aufnahmebereich (32) für einen Anpassbereicht (34) aufweist, und
- einen Anpassbereich (34), der einen Schnittstellenbereich (36) mit dem Tragteil (30) und einen Befestigungsbereich (38) eines Funktionsorgans (14) aufweist,
wobei das Set mindestens zwei Module (35) aufweist, deren Anpassbereich (34) unterschiedlich sind und deren Tragteile (30) identisch sind oder deren Anpassbereiche (34) identisch und deren Tragteile (30) unterschiedlich sind.

2. Set nach dem vorhergehenden Anspruch, bei dem die Schnittstellenbereiche (36) der Anpassbereiche (34) der zwei Module (35) identisch sind.

3. Set nach Anspruch 2, bei dem die Befestigungsbereiche (38) der Anpassbereiche (34) der zwei Module (35) unterschiedlich sind.

4. Set nach Anspruch 2, bei dem die Befestigungsbereiche (38) der Anpassbereiche (34) der zwei Module (35) identisch sind.

5. Set nach Anspruch 3 oder 4, bei dem die relative Position des Befestigungsbereichs (38) in Bezug zu dem Schnittstellenbereich (36) des Anpassbereiches (34) jedes der zwei Module (35) von einem Modul zum anderen unterschiedlich ist.

6. Set nach einem der vorhergehenden Ansprüche, bei dem der Aufnahmebereich (32) des Tragteils (30) und der Schnittstellenbereich (36) des Anpassbereiches (34) komplementäre Befestigungsmittel (40, 42) aufweisen, insbesondere Einrastmittel.

7. Set nach einem der vorhergehenden Ansprüche, bei dem das Tragteil (30) und/oder das Anpassteil (34) aus Plastik hergestellt sind.

8. Set nach einem der vorhergehenden Ansprüche, bei dem das Tragteil (30), das durch Formen hergestellt wird, eines oder mehrere der Elemente der Gesamtheit aufweist, die aus einem Absorber (16), einer Blasenbildungsschutzvorrichtung (22) und Mitteln (24) zum Befestigen eines Radlaufblechs besteht.

9. Set nach einem der vorhergehenden Ansprüche, bei dem das Modul (35) ferner ein Funktionsorgan (14), das an dem Anpassbereich (34) befestigt ist, aufweist.

10. Set nach dem vorhergehenden Anspruch, bei dem das Funktionsorgan (14) aus den Elementen der Gesamtheit ausgewählt wird, die aus einem Absorber (16), einer Scheinwerfer-Waschanlage (18), einem Nebelscheinwerfer (20), einer Blasenbildungsschutzvorrichtung (22), einem Radlaufblech, einem Einparkhilfesensor, einer Vorrichtung zur Beabstandung von Stoßstangenhäuten beim Lagern oder beim Transport, einer Stoßstangen-Traversenverstärkung und einem Radar besteht.
